(19) Europäisches Patentamt
European Patent Office
Office européen des brevets

(11) EP 1 923 903 B1

(12) EUROPEAN PATENT SPECIFICATION

(45) Date of publication and mention
of the grant of the patent:
15.06.2011  Bulletin 2011/24

(51) Int Cl.:
H01J 63/02 (2006.01)    G09G 3/34 (2006.01)
H01J 63/06 (2006.01)

(21) Application number: 07120253.5

(22) Date of filing: 08.11.2007

(54) **Light emission device and display device using the light emission device as a light source**

Lichtemissionsvorrichtung und die Lichtemissionsvorrichtung als Lichtquelle verwendende Anzeigevorrichtung

Dispositif électroluminescent et dispositif d'affichage utilisant le dispositif électroluminescent en tant que source lumineuse

(84) Designated Contracting States:
DE FR GB NL

(30) Priority: 14.11.2006  KR 20060112202
04.04.2007  KR 20070033310
11.06.2007  KR 20070056669

(43) Date of publication of application:
21.05.2008  Bulletin 2008/21

(73) Proprietor: Samsung SDI Co., Ltd.
Suwon-si
Gyeonggi-do (KR)

(72) Inventors:
• Kang, Su-Joung,
Legal & IP Team
Suwon-si,
Gyeonggi-do (KR)
• Ryu, Kyung-Sun,
Legal & IP Team
Suwon-si,
Gyeonggi-do (KR)
• Shin, Jong-Hoon,
Legal & IP Team
Suwon-si,
Gyeonggi-do (KR)
• Lee, Jin-Ho,
Legal & IP Team
Suwon-si,
Gyeonggi-do (KR)
• Jung, Kyu-Won,
Legal & IP Team
Suwon-si,
Gyeonggi-do (KR)
• Lee, Sang-Jin,
Legal & IP Team
Suwon-si,
Gyeonggi-do (KR)

(74) Representative: Hengelhaupt, Jürgen et al
Gulde Hengelhaupt Ziebig & Schneider
Patentanwälte - Rechtsanwälte
Wallstrasse 58/59
10179 Berlin (DE)

(56) References cited:
EP-A- 0 785 446          WO-A-96/13753
WO-A-03/077013          JP-A- 9 073 877
KR-B1- 100 766 925       US-A1- 2002 130 830
US-A1- 2003 025 851      US-B1- 6 249 079
US-B1- 6 426 590         US-B1- 6 504 311

**Description**

**BACKGROUND OF THE INVENTION**

**Field of the Invention**

The present invention relates to a light emission device and a display device using the light emission device as a light source. More particularly, the present invention relates to a light emission device having a spacer to maintain a gap between a first substrate and a second substrate.

**Description of Related Art**

There are many different types of light emission devices that radiate visible light. One type of light emission device includes a structure in which an electron emission unit having a plurality of electron emission elements is disposed on a first substrate and a light emission unit having an anode electrode and a phosphor layer is disposed on a second substrate. The first and second substrates are sealed to each other at their peripheries using a sealing member, and the inner space between the first and second substrates is exhausted to form a vacuum vessel (or chamber).

The electron emission elements emit electrons toward the phosphor layer, and the electrons excite the phosphor layer to cause the phosphor layer to emit visible light. The anode electrode receives a high voltage (i.e., anode voltage) of a few thousand volts, to accelerate the electrons toward the phosphor layer. In general, luminance of the light emission device is proportional to the anode voltage.

Spacers are disposed between the first and second substrates to withstand a compression force or pressure applied to the vacuum vessel and to maintain a gap between the first and second substrates. The light emission device includes a plurality of pixel regions, and the spacers are usually located at an area corresponding to peripheries of the pixel regions.

The light emission device may be used as a light source in a display device having a passive type (or non-self emissive type) of display panel. In this case, it is required to enhance luminance of the light emission device by increasing the anode voltage. However, arc discharge is easily caused inside the vacuum vessel as the anode voltage is increased.

A gap between the first and second substrates is determined by a height of the spacers, and is closely associated with generation of the arc discharge. That is, the arc discharge is easily generated even under a low anode voltage condition as a gap between the first and second substrates is reduced, thereby decreasing high voltage stability of the light emission device. Accordingly, it is difficult to increase the anode voltage and luminance of the light emission device.

Meanwhile, a width of the spacers must be enlarged to ensure shape stability as a gap between the first and second substrates is increased. When the width of the spacers is enlarged, the spacers can be seen from the outside of the light emission device, and thus luminance uniformity of the light emission device is deteriorated. Therefore, it is required to provide a light diffuser in front of the light emission device at a sufficient distance from the light emission device. However, light loss is increased in proportion to the distance between the light emission device and the light diffuser.

A light emission device of the type described above is known, for example, from US-A-2005/0052116.

**SUMMARY OF THE INVENTION**

Exemplary embodiments in accordance with the present invention provide a light emission device that can improve high voltage stability by preventing an arc discharge inside a vacuum vessel and realize high luminance by increasing an anode voltage, and provide a display device using the light emission device as a light source.

Further, exemplary embodiments in accordance with the present invention provide a light emission device that can reduce light loss caused by a light diffuser by minimizing a decline of luminance uniformity, and provide a display device using the light emission device as a light source.

According to the present invention, a light emission device includes a first substrate and a second substrate facing each other with a gap therebetween. An electron emission unit is located on one side of the first substrate to emit electrons toward the second substrate. A light emission unit is located on one side of the second substrate to emit visible light upon excitation by the electrons. A plurality of spacers are provided between the first substrate and the second substrate. The plurality of spacers have a height of about 5 mm - 30 mm. Preferably, the plurality of spacers have a height ranging from 5 mm to 20 mm, and more preferably the plurality of spacers have a height ranging from 5 mm to 9 mm.

In an exemplary embodiment of the present invention, the spacers have a quadrangular pillar structure and a width of a side of each of the plurality of spacers is 0.2 mm - 5 mm. More preferably, a width of a side of each of the plurality of spacers ranges from 0.5 mm to 3 mm, even more preferably from 1 mm to 2 mm.

According to the present invention, the first substrate and the second substrate each include an active area in which the electron emission unit and the light emission unit are located, and the plurality of spacers satisfy a condition that $0.1 \leq (S2/S1) \times 100 \leq 1.5$, where S1 is a size of the active area and S2 is a total area occupied by the spacers within the active area. Preferably, the plurality of spacers satisfy the condition $0.5 \leq (S2/S1) \times 100 \leq 1.0$.

In an exemplary embodiment of the present invention, the spacers have a structure selected from the group consisting of a quadrangular pillar structure, a cylindrical structure, and a rod-type structure.

In an exemplary embodiment of the present invention, the electron emission unit includes cathode electrodes, gate electrodes, and electron emission regions. The gate electrodes cross the cathode electrodes to define crossing regions. The gate electrodes and insulated from the cathode electrodes. The electron emission regions are electrically coupled to the cathode electrodes.

In an exemplary embodiment of the present invention, the plurality of spacers may be located outside of the crossing regions.

In an exemplary embodiment of the present invention, the light emission unit includes an anode electrode for receiving an anode voltage of 7 kV - 17 kV and includes a phosphor layer on one side of the anode electrode.

In an exemplary embodiment of the present invention, the light emission device further includes a light diffuser disposed in a front of the second substrate and spaced apart from the second substrate by a distance less than or equal to 12 mm. More preferably, the distance is less than or equal to 10 mm, even more preferably, the distance is less than or equal to 8 mm.

Further according to the present invention, a display device is provided which includes a display panel for displaying an image, a light emission panel for emitting light toward the display panel, and a light diffuser disposed between the display panel and the light emission panel. The light emission panel includes a first substrate and a second substrate facing each other with a gap therebetween. An electron emission unit is located on one side of the first substrate to emit electrons toward the second substrate. A light emission unit is located on one side of the second substrate to emit visible light by the electrons. A plurality of spacers are provided between the first substrate and the second substrate. The plurality of spacers have a height of about 5 mm - 30 mm.

The plurality of spacers may have a quadrangular pillar structure, a cylindrical structure, or a rod-type structure. Preferably, the plurality of spacers have a quadrangular pillar structure and a width of a side of each of the plurality of spacers is 0.2 mm - 5 mm.

Further, the first substrate and the second substrate each include an active area in which the electron emission unit and the light emission unit are respectively located, and the plurality of spacers satisfy the condition $0.1 \leq (S2/S1) \times 100 \leq 1.5$, where S1 is a size of the active area and S2 is a total area occupied by the plurality of spacers within the active area.

Preferably, the electron emission unit includes cathode electrodes, gate electrodes crossing the cathode electrodes and insulated from the cathode electrodes, and electron emission regions electrically coupled to the cathode electrodes.

Preferably, the light emission unit includes an anode electrode for receiving an anode voltage of 7 kV - 17 kV and includes a phosphor layer on one side of the anode electrode.

Preferably, the light diffuser is spaced apart from the light emission panel by a distance less than or equal to 12 mm.

In an exemplary embodiment of the present invention, the display panel includes first pixels and the light emission device includes second pixels. The number of second pixels may be less than that of the first pixels, and a luminance of each second pixel may be independently controlled in response to a highest gray level among gray levels of corresponding ones of the first pixels.

In an exemplary embodiment of the present invention, the display panel may be a liquid crystal display panel.

## BRIEF DESCRIPTION OF THE DRAWINGS

FIG. 1 is an exploded perspective view illustrating a light emission device according to an exemplary embodiment of the present invention.

FIG. 2 is a partial sectional view illustrating the light emission panel shown in FIG. 1.

FIG. 3 is a partial exploded perspective view illustrating the internal structure of an active area in the light emission panel shown in FIG. 1.

FIG. 4 is a top view illustrating the electron emission unit and the spacer shown in FIG. 3.

FIG. 5 is a schematic view illustrating an active area and spacers of the light emission panel shown in FIG. 1.

FIG. 6 is a partial exploded perspective view illustrating a light emission panel according to another exemplary embodiment of the present invention.

FIG. 7 is a partial exploded perspective view illustrating a light emission panel according to yet another exemplary embodiment of the present invention.

FIG. 8 is an exploded perspective view illustrating a display device according to an exemplary embodiment of the present invention.

FIG. 9 is a partial sectional view illustrating the display panel shown in FIG. 8.

## DETAILED DESCRIPTION

The present invention will now be described more fully with reference to the accompanying drawings, in which exemplary embodiments of the invention are shown. The invention may, however, be embodied in many different forms and should not be construed as being limited to the embodiments set forth herein; rather these embodiments are provided so that this disclosure will be thorough and complete, and will fully convey the concept of the invention to those skilled in the art.

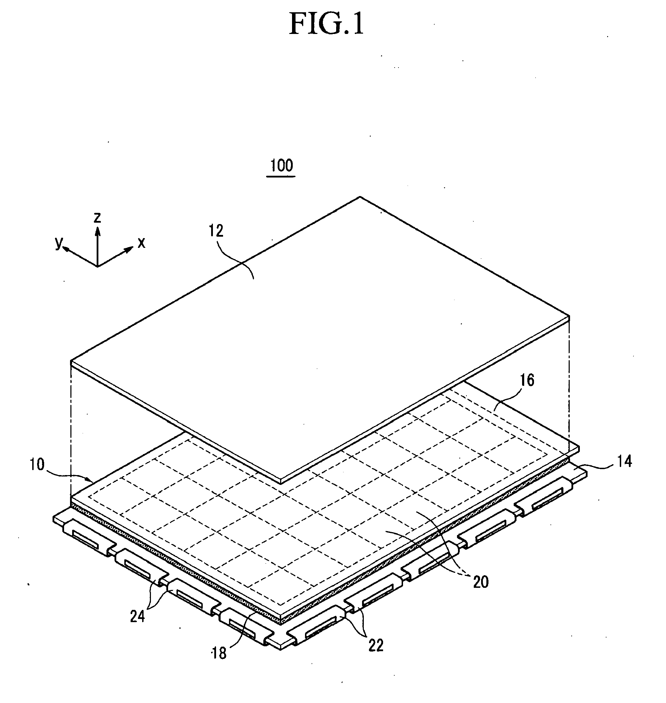

A light emission device according to an exemplary embodiment of the present invention will be described with reference to FIGs. 1 to 5.

Referring to FIG. 1, a light emission device 100 of an exemplary embodiment includes a light emission panel 10 and a light diffuser 12 disposed in front of the light emission panel 10 and spaced apart from the light emission panel 10 by a distance, which may be a predetermined distance.

The light emission panel 10 includes first and second substrates 14 and 16 facing each other in a parallel manner with an interval therebetween. The interval may be a predetermined interval. A sealing member 18 is provided between the first and second substrates 14 and 16 at their peripheries to seal them together and thus form a vacuum vessel (or chamber). The inner space of the vacuum vessel is kept at a degree of vacuum of about $1.33*10^{-4}$ Pa ($10^{-6}$ Torr).

The light emission panel 10 includes a plurality of pixel regions 20 of which luminance is independently controlled. The light emission panel 10 further includes connectors 22 and 24 for electrically connecting driving electrodes (not shown) provided inside the light emission panel 10 and circuit board assemblies (not shown) disposed on the back side of the first substrate 14 to apply driving voltages to the driving electrodes.

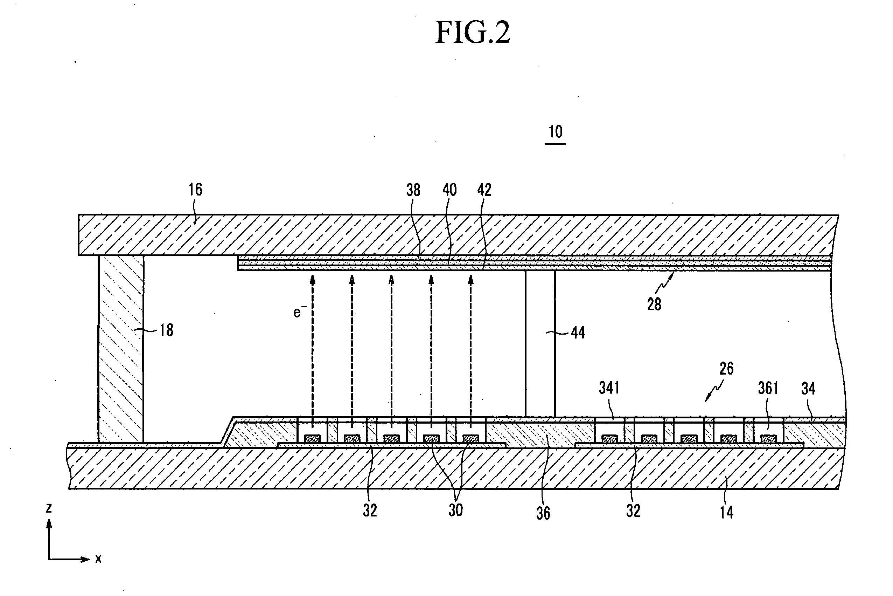

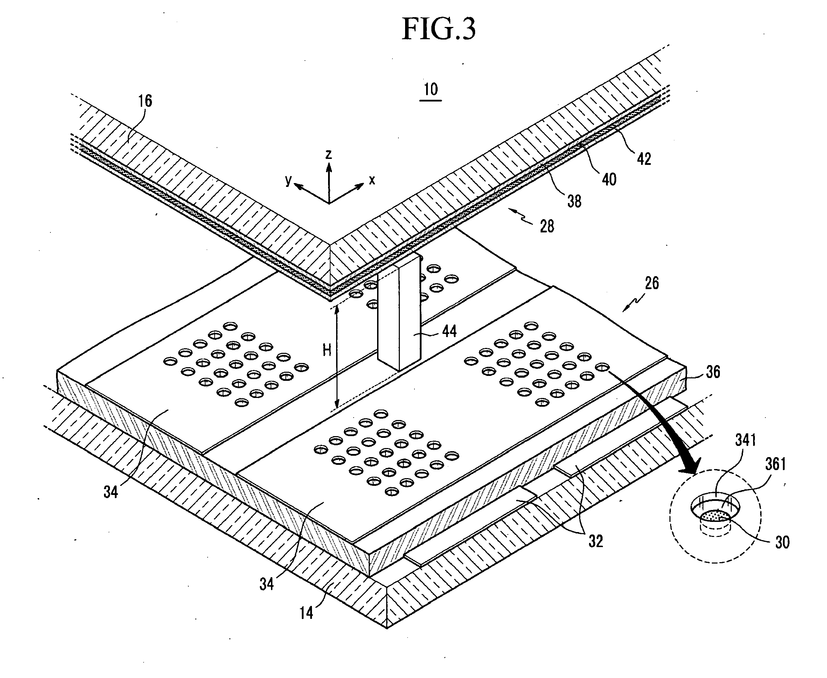

Referring to FIGs. 2 and 3, inside the sealing member 18, each of the first and second substrates 14 and 16 is divided into an active area from which visible light is actually emitted and a non-active area surrounding the active area. An electron emission unit 26 including a plurality of electron emission elements is provided on an inner surface of the first substrate 14 at the active area, and a light emission unit 28 for emitting the visible light is provided on an inner surface of the second substrate 16 at the active area.

The second substrate 16 on which the light emission unit 28 is located may be a front substrate of the light emission panel 10, and the first substrate 14 on which the electron emission unit 26 is located may be a rear substrate of the light emission panel 10.

The electron emission unit 26 includes electron emission regions 30 and driving electrodes 32 and 34 for controlling an electron emission amount of the electron emission regions 30. The driving electrodes include cathode electrodes 32 that are arranged in a stripe pattern extending in a first direction (y-axis direction of FIG. 3) of the first substrate 14, and gate electrodes 34 that are arranged in a stripe pattern extending in a second direction (x-axis direction of FIG. 3) perpendicular to the first direction. An insulation layer 36 is interposed between the cathode electrodes 32 and the gate electrodes 34.

Openings 341 and openings 361 are respectively formed in the gate electrodes 34 and the insulation layer 36 at each region where the cathode and gate electrodes 32 and 34 cross each other to partially expose the cathode electrodes 32. The electron emission regions 30 are located on the cathode electrodes 32 in the openings 361 of the insulation layer 36.

The electron emission regions 30 are formed of a material that emits electrons when an electric field is formed therearound under a vacuum atmosphere, such as a carbon-based material or a nanometer-sized material. For example, the electron emission regions 30 may include at least one of materials selected from the group consisting of carbon nanotubes, graphite, graphite nanofibers, diamonds, diamond-like carbon, fullerene ($C_{60}$), silicon nanowires, and combinations thereof. Alternatively, the electron emission regions may be formed with a sharp tip structure made of a molybdenum-based material or a silicon-based material.

In the above-described structure, one cathode electrode 32, one gate electrode 34, and the electron emission regions 30 located at one crossing region of the cathode and gate electrodes 32 and 34 form a single electron emission element. One electron emission element may correspond to a single pixel region of the light emission panel 10. Alternatively, two or more of the electron emission elements may correspond to the single pixel region of the light emission panel 10.

The light emission unit 28 includes an anode electrode 38, a phosphor layer 40 located on a surface of the anode electrode 38, and a reflection layer 42 covering the phosphor layer 40.

The anode electrode 38 is formed of a transparent conductive material, such as indium tin oxide (ITO) so that visible light emitted from the phosphor layer 40 can transmit through the anode electrode 38. The anode electrode 38 is an acceleration electrode that receives a high voltage (i.e., anode voltage) of thousands of volts or more to place the phosphor layer 40 at a high potential state.

The phosphor layer 40 may be formed of a mixture of red, green, and blue phosphors, which can collectively emit white light. The phosphor layer 40 may be formed on the entire active area of the second substrate 16, or may be divided into a plurality of sections corresponding to the pixel regions. In the latter case, a black layer may be disposed between the sections of the phosphor layer. FIG. 2 and FIG. 3 show a case where the phosphor layer 40 is formed on the entire active area of the second substrate 16.

The reflection layer 42 may be an aluminum layer having a thickness of about several thousands of angstroms (A) and including a plurality of tiny holes for passing the electrons. The reflection layer 42 functions to enhance the luminance of the light emission panel 10 by reflecting visible light, which is emitted from the phosphor layer 40 toward the first substrate 14, and then reflected back to the second substrate 16. In another exemplary embodiment, the anode electrode 38 formed by the transparent conductive material can be eliminated and the reflection layer 42 can function as the anode electrode by receiving the anode voltage.

Disposed between the first and second substrates 14 and 16 are spacers 44 that are able to withstand a compression force or pressure applied to the vacuum vessel and to uniformly maintain a gap between the first and second substrates 14 and 16. The spacers 44 are located outside of the regions where the cathode and gate electrodes 32 and 34 cross each other. For example, the spacers 44 may be located outside of diagonal corners of the crossing regions. The spacers 44 can be formed to have various structures. For example, in one embodiment, the spacer 44 has a quadrangular pillar structure as illustrated in FIG. 3.

The light emission panel 10 is driven when a scan driving voltage is applied to either the cathode or gate electrodes 32 or 34, a data driving voltage is applied to the other of the cathode or gate electrodes 32 or 34, and an anode voltage is applied to the anode electrode 38.

Electric fields are formed around the electron emission regions 30 at the pixels where a voltage difference between the cathode and gate electrodes 32 and 34 is equal to or greater than a threshold value, and thus electrons are emitted from the electron emission regions 30. The emitted electrons collide with a corresponding portion of the phosphor layer 40 by being attracted by the anode voltage applied to the anode electrode 38, thereby exciting the phosphor layer 40.

In the light emission panel 10 according to the invention, the spacers 44 are formed to have a height H (see FIG. 3) of 5-30mm. According to the height of the spacers 44, the first and second substrates 14 and 16 are spaced apart from each other by a distance of 5-30mm.

When the height of the spacers 44 is less than 5mm, since arc discharge is easily generated inside the vacuum vessel even under a condition in which an anode voltage that is smaller than 5kV is applied to the anode electrode 38, the anode electrode 38 cannot receive an anode voltage of over 5kV. Therefore, high voltage stability of the light emission panel 10 is deteriorated and it is difficult to realize sufficient luminance.

When the height of the spacers 44 is greater than 30mm, the width of the spacers 44 must be enlarged to ensure shape stability, thereby increasing the surface area of the spacers 44 that is exposed to the vacuum space. In general, the spacers 44 are formed of a dielectric material, such as glass or ceramic, and electrical charges are accumulated on exposed surfaces of the spacers 44 due to a collision of electrons with the spacers 44 when the light emission panel 10 is driven. In this case, arc discharge may be easily caused at the charged surface of the spacers 44.

Further, a luminance difference between the pixel regions and the regions where the spacers 44 are located is increased. In addition, the spacers 44 can be seen from the outside of the light emission panel 10 due to the enlarged width of the spacers 44. Accordingly, the distance between the light emission panel 10 and the light diffuser 12 must be increased to improve luminance uniformity. However, in this case, the thickness of the light emission device 100 is increased and light loss is also increased such that luminance of the light emission device 100 is decreased.

Table 1 lists measurement results of resistance to arc discharge and a minimum distance between the light emission panel 10 and the light diffuser 12 that can ensure luminance uniformity of the light emission device 100 according to the height of the spacers 44. In the experiments, a voltage difference between the cathode and gate electrodes was established to be 40-60V, an anode voltage applied to the anode electrode was established to be 2-17kV, and a light diffuser 12 having transmittance above 80% was used.

**Table 1**

|  | Height of spacer (mm) | Resistance to arc discharge | Minimum distance between light emission panel and light diffuser (mm) |
|---|---|---|---|
| Comparative Example 1 | 3 | X | 10 |
| Comparative Example 2 | 4 | X | 10 |

(continued)

|  | Height of spacer (mm) | Resistance to arc discharge | Minimum distance between light emission panel and light diffuser (mm) |
|---|---|---|---|
| Example 1 | 5 | ○ | 10 |
| Example 2 | 6 | ◎ | 10 |
| Example 3 | 7 | ◎ | 10 |
| Example 4 | 10 | ◎ | 11 |
| Example 5 | 15 | ◎ | 11 |
| Example 6 | 20 | ◎ | 11 |
| Example 7 | 25 | ◎ | 12 |
| Example 8 | 30 | ◎ | 12 |
| Comparative Example 3 | 35 | ○ | 15 |
| Comparative Example 4 | 40 | ○ | 17 |

As indicated in Table 1, Comparative Examples 1 and 2 exhibited poor resistance to arc discharge (X in the Table), Example 1 and Comparative Examples 3 and 4 exhibited satisfactory resistance to arc discharge (○ in the Table), and Examples 2 to 8 exhibited excellent resistance to arc discharge (◎ in the Table). Further, as indicated in Table 1, the minimum distance between the light emission panel and the light diffuser was significantly increased in Comparative Examples 3 and 4.

In particular, arc discharge was generated even under a condition in which an anode voltage of 2-3kV was applied to the anode electrode in Comparative Examples 1 and 2. However, an arc discharge was not generated under conditions in which anode voltages of 7kV, 12kV, and 17kV, respectively, were applied to the anode electrode in the respective Examples 1, 4, and 8.

As described above, since an anode voltage greater than 7kV can be applied to the anode electrode 38, the light emission device 100 of the present embodiment can realize high luminance. Also, high voltage stability of the light emission panel 10 can be enhanced by preventing arc discharge inside the vacuum vessel, and efficiency of the light emission device 100 (luminance / power consumption) can be improved by minimizing or reducing light loss caused by the light diffuser 12.

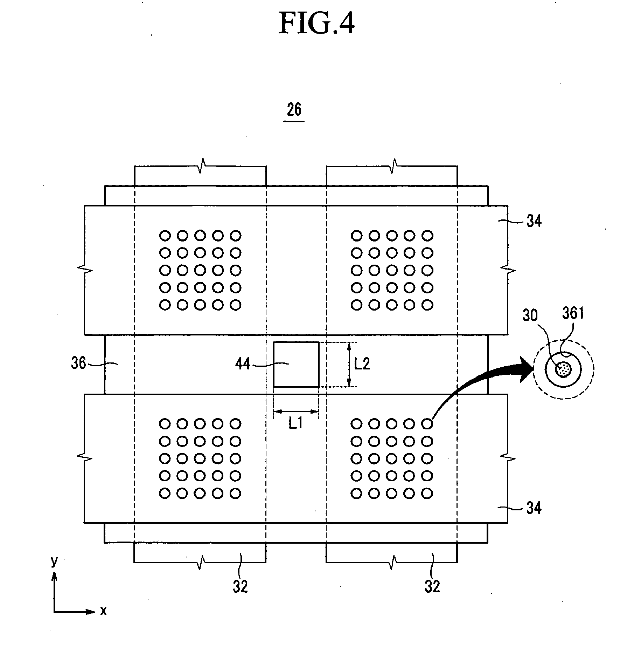

In addition, the spacers 44 of the present embodiment are formed such that the width of one side is 0.2-5mm. Referring to FIGs. 3 and 4, the spacers 44 may be formed to have a quadrangular pillar structure. At least one side among a first side (e.g., horizontal side) of the spacers 44 and a second side (e.g., vertical side) of the spacers 44 is formed to have the width of 0.2-5mm. In FIG. 4, L1 denotes the width of the first side and L2 denotes the width of the second side.

In one embodiment, when one side of the spacers 44 has a width below 0.2mm, it is difficult to mount the spacers 44 on the electron emission unit 26 or the light emission unit 28, and the fixing ability of the spacers 44 is decreased. Also, in one embodiment, when one side of the spacers 44 has a width above 5mm, luminance uniformity of the light emission panel 10 is lowered. Therefore, the distance between the light emission panel 10 and the light diffuser 12 is increased or transmittance of the light diffuser 12 is decreased to improve luminance uniformity, in one embodiment according to the present invention.

In an exemplary embodiment, the light diffuser 12 has a transmittance greater than 80% to minimize or reduce light loss. When one side of the spacers 44 has a width less than or equal to 5mm, a light diffuser 12 having transmittance above 80% can be applied.

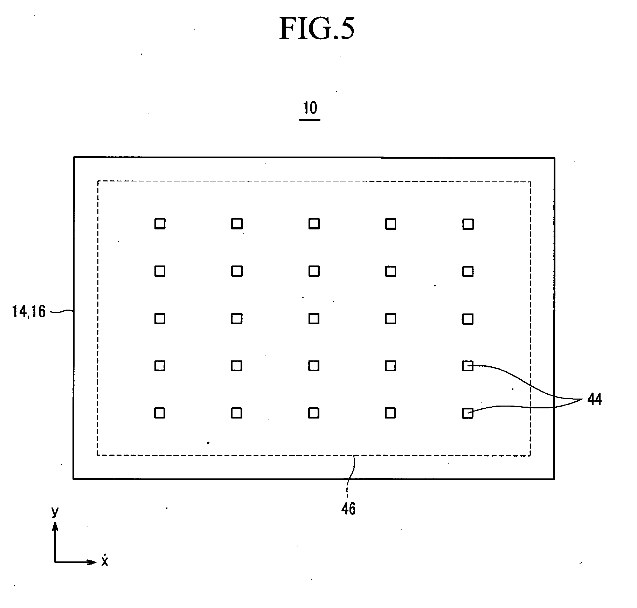

According to the invention, the spacers 44 are formed such that the total area occupied by the spacers 44 within the active area 46 (FIG. 5) satisfies the below-described condition. FIG. 5 schematically shows the active area 46 of the first and second substrates 14 and 16 and the spacers 44 located in the active area 46. Referring to FIG. 5, in the light emission panel 10 of the present embodiment, the spacers 44 are formed to satisfy the following condition:

$$0.1 \le (S2/S1) \times 100 \le 1.5,$$

where S1 indicates the size of the active area 46 and S2 indicates the total area occupied by the spacers 44 within the active area 46.

When the area ratio of the active area 46 and the spacers 44 is less than 0.1, the mounting process of the spacers 44 must be precise and the ability of the spacers 44 of withstanding compression from outside is decreased. When the area ratio of the active area 46 and the spacers 44 is greater than 1.5, luminance uniformity of the light emission panel 10 is decreased and thus it is required to increase the distance between the light emission panel 10 and the light diffuser 12 or decrease transmittance of the light diffuser 12.

For example, if the size of the active area 46 is about $144cm^2$ in a 7-inch light emission panel 10, and there are twelve spacers 44 of which each first side and each second side has a width of 2mm located within the active area 46, the total area occupied by the spacers 44 is $48mm^2$ ($0.48cm^2$), and the area ratio of the active area 46 and the spacers 44 is about 0.33%. The total area occupied by the spacers 44 may be appropriately varied by controlling the size and the number of the spacers 44.

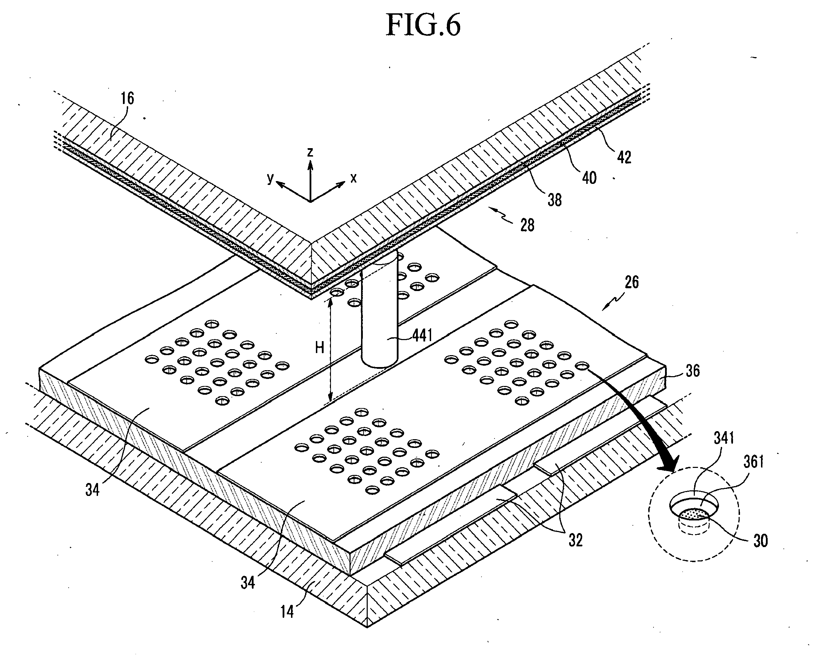

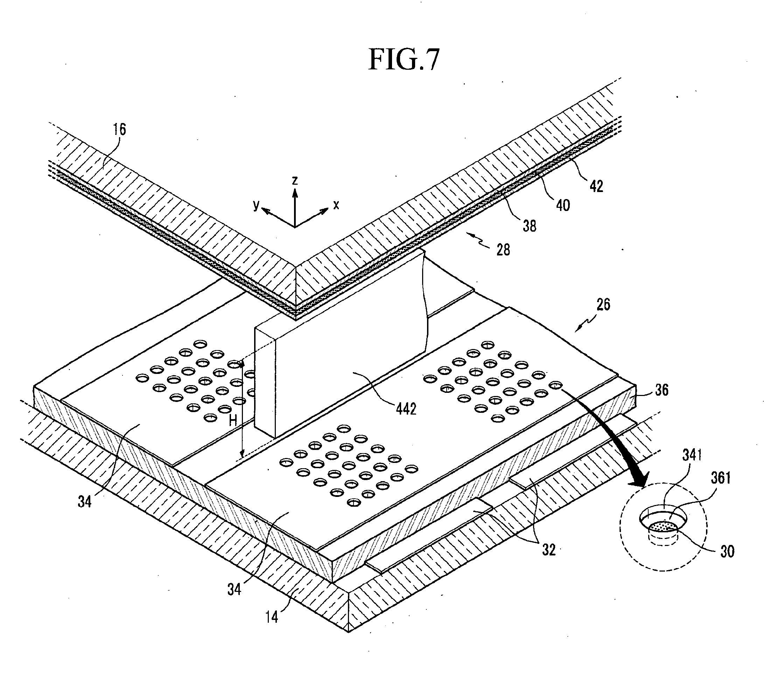

The spacers 44 may be formed to have various structures including the above-described quadrangular pillar structure. For example, as shown in FIG. 6, the spacer 441 may be formed to have a cylindrical structure. As shown in FIG. 7, the spacer 442 may be formed to have a wall-type structure (i.e. a rectangular parallelepiped extending in a direction parallel to the direction of the gate electrodes 34). The spacers 441 and 442 shown in FIGs. 6 and 7 are also located outside of the regions where the cathode and gate electrodes 32 and 34 cross each other. In FIGs. 6 and 7, the elements other that the spacers 441 and 442 are denoted by the same reference numerals as in FIG. 3.

The spacers 441 and 442 also have a height of 5-30mm and are formed such that the total area occupied by the spacers 441 and 442 within the active area 46 satisfies the condition that $0.1 \leq (S2/S1) \times 100 \leq 1.5$.

The above-described light emission panel 10 can apply an anode voltage greater than 7kV to the anode electrode 38, and in an exemplary embodiment, can apply an anode voltage of 7-17kV to the anode electrode 38, and thus can realize a maximum luminance of about $10,000cd/m^2$ at a central portion of the active area 46.

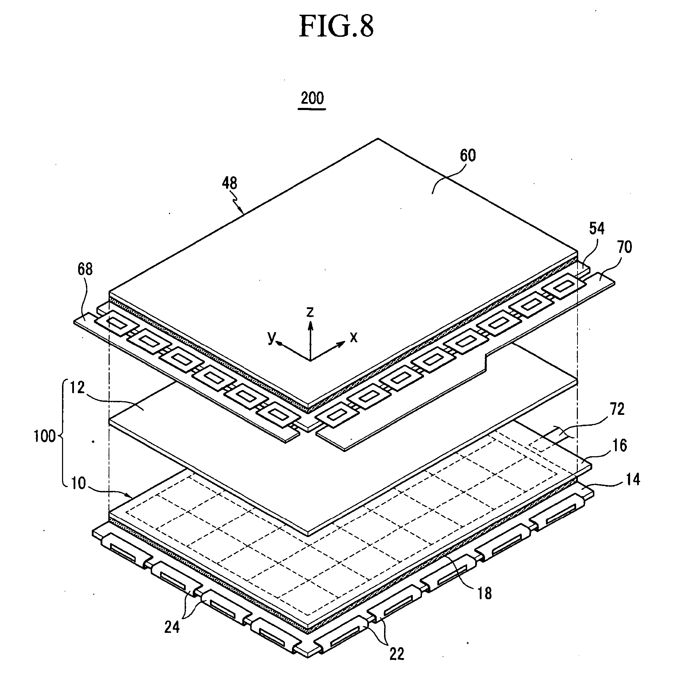

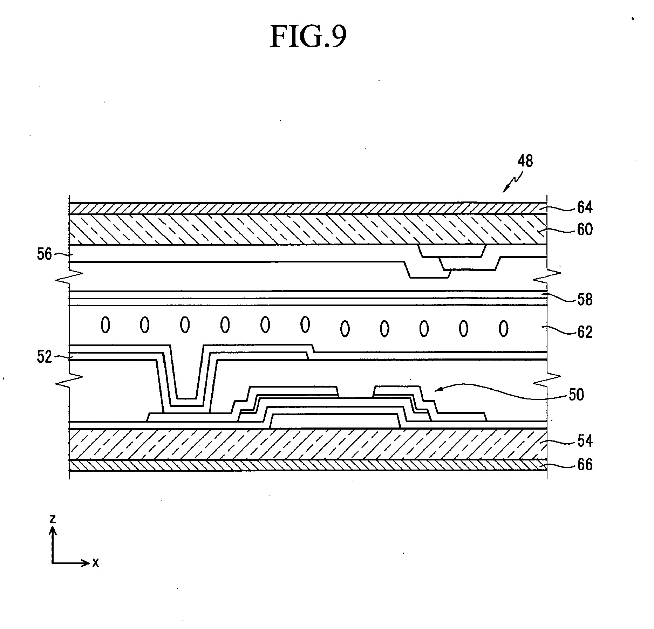

A display device using the light emission device as a light source according to an exemplary embodiment will now be described with reference to FIGs. 8 and 9.

Referring to FIG. 8, a display device 200 of this exemplary embodiment includes a light emission device 100 having a light emission panel 10 and a light diffuser 12, and a display panel 48 located in front of the light emission device 100. A top chassis (not shown) is located in front of the display panel 48 and a bottom chassis (not shown) is located in the rear of the light emission panel 10.

A liquid crystal display panel or another passive type (or non-emissive type) of display panel may be used as the display panel 48. For example, the display panel 48 may be a liquid crystal display panel as described below.

Referring to FIG. 9, the display panel 48 includes a lower substrate 54 on which a plurality of thin film transistors (TFTs) 50 and a plurality of pixel electrodes 52 are formed, an upper substrate 60 on which a color filter layer 56 and a common electrode 58 are formed, and a liquid crystal layer 62 provided between the lower and upper substrates 54 and 60. Polarizing plates 64 and 66 are respectively attached on the top surface of the upper substrate 60 and the bottom surface of the lower substrate 54 to polarize the light passing through the display panel 48.

Each sub-pixel comprises a pixel electrode 52 and each pixel electrode 52 is controlled by the TFT 50. The pixel electrodes 52 and the common electrode 58 are formed of a transparent conductive material. The color filter layer 56 includes red, green, and blue layers arranged to correspond to respective sub-pixels. Three sub-pixels, i.e., the red, green, and blue layers that are located side by side, define a single pixel.

When the TFT 50 of a sub-pixel (e.g., a predetermined sub-pixel) is turned on, an electric field is formed between the pixel electrode 52 and the common electrode 58. A twisting angle of liquid crystal molecules of the liquid crystal layer 62 is varied thereby, in accordance of which the light transmittance of the corresponding sub-pixel is varied. The display panel 48 realizes a luminance (e.g., a predetermined luminance) and color for each pixel by controlling the light transmittance of the sub-pixels.

In FIG. 8, reference numeral 68 denotes a gate circuit board assembly for transmitting gate driving signals to each of gate electrodes of the TFTs, and reference numeral 70 denotes a data circuit board assembly for transmitting data driving signals to each of source electrodes of the TFTs.

Referring to FIG. 8, the light emission panel 10 includes a plurality of pixels, the number of which is less than the number of pixels of the display panel 48, so that one pixel of the light emission panel 10 corresponds to two or more pixels of the display panel 48. Each pixel of the light emission panel 10 emits light in response to a highest gray level among gray levels of the corresponding pixels of the display panel 48. The light emission panel 10 can represent a gray level of 2 to 8 bits at each pixel.

For convenience, the pixels of the display panel 48 are referred to as first pixels and the pixels of the light emission panel 10 are referred to as second pixels. The first pixels corresponding to one second pixel are referred to as a first pixel group.

In a driving process of the light emission panel 10, a signal control unit (not shown) that controls the display panel 48 (i) detects the highest gray level of the first pixel group, (ii) operates a gray level required for emitting light from the second pixel in response to the detected high gray level and converts the operated gray level into digital data, (iii) generates a driving signal of the light emission panel 10 using the digital data, and (iv) applies the driving signal to the light emission panel 10.

The driving signal of the light emission panel 10 includes a scan driving signal and a data driving signal. Either the cathode electrodes or the gate electrodes (e.g., the gate electrodes) are applied with the scan driving signal, and the other (e.g., the cathode electrodes) are applied with a data driving signal.

Scan and data circuit board assemblies (not shown) of the light emission panel 10 may be located on a rear surface of the light emission panel 10. In FIG. 8, reference numeral 22 denotes first connectors for electrically connecting the cathode electrodes and the data circuit board assembly, and reference numeral 24 denotes second connectors for electrically connecting the gate electrodes and the scan circuit board assembly. Reference numeral 72 denotes a third connector for applying an anode voltage to the anode electrode.

When an image is displayed on the first pixel group, the corresponding second pixel of the light emission panel 10 emits light with a gray level, which may be predetermined, by synchronizing with the first pixel group. That is, the light emission panel 10 independently controls the luminance of each pixel and thus provides a proper intensity of light to the corresponding pixels of the display panel 48 in proportion to the luminance of the first pixel group. As a result, the display device 200 of the present exemplary embodiment can enhance the contrast ratio of the screen, thereby improving the display quality.

## Claims

1. A light emission device comprising:

    a light emission panel (10) for emitting light; and
    a light diffuser (12) for diffusing light emitted by the light emission panel (10);
    wherein the light emission panel (10) includes:

      a first substrate (14) and a second substrate (16) facing each other with a gap therebetween;
      an electron emission unit (26) on one side of the first substrate (14) to emit electrons toward the second substrate (16);
      a light emission unit (28) on one side of the second substrate (16) facing the first substrate (14) to emit visible light upon excitation by the electrons emitted by the electron emission unit (26); and
      a plurality of spacers (44, 441, 442) between the first substrate (14) and the second substrate (16), **characterized in that**:

        the plurality of spacers (44, 441, 442) have a height ranging from 5 mm to 30 mm, , and wherein the first substrate (14) and the second substrate (16) each include an active area (46) in which the electron emission unit (26) and the light emission unit (28) are located, and the plurality of spacers (44, 441, 442) satisfy the following condition:

$$0.1 \leq (S2/S1) \times 100 \leq 1.5,$$

        where S1 is a size of the active area (46) and S2 is a total area occupied by the plurality of spacers (44, 441, 442) within the active area (46).

2. The light emission device of claim 1, wherein the plurality of spacers (44, 441, 442) have a quadrangular pillar structure, a cylindrical structure, or a wall-type structure.

3. The light emission device of claim 1, wherein the plurality of spacers (44, 441, 442) have a quadrangular pillar structure and a width of a side of each of the plurality of spacers range from 0.2 to 5mm.

4. The light emission device of one of the preceding claims, wherein the electron emission unit (26) includes cathode electrodes (32), gate electrodes (34), and electron emission regions (30), the gate electrodes (34) crossing the cathode electrodes (32) to define crossing regions, the gate electrodes (34) being insulated from the cathode electrodes (32), and the electron emission regions (30) being electrically coupled to the cathode electrodes (32).

**5.** The light emission device of claim 3, wherein the plurality of spacers (44, 441, 442) are located outside of the crossing regions.

**6.** The light emission device of one of the preceding claims, wherein the light emission unit (28) includes an anode electrode (38) adapted for receiving an anode voltage ranging from 7 kV to 17 kV and includes a phosphor layer (40) on one side of the anode electrode (38).

**7.** The light emission device of one of the preceding claims, wherein the light diffuser (12) is located in front of the second substrate (16) and spaced apart from the second substrate (16) by a distance less than or equal to 12 mm.

**8.** A display device comprising:

a display panel (48) for displaying an image; and
a light emission device (100) according to one of claims 1-7, the light emission device (100) comprising a light emission panel (10) for emitting light toward the display panel (48), and
a light diffuser (12) between the display panel (48) and the light emission panel (10).

**9.** The display device of claim 8, wherein the display panel (48) includes first pixels and the light emission panel (10) includes second pixels, the number of second pixels is less than the number of first pixels, and each of the second pixels is adapted to emit light having independently controlled luminance according to a highest gray level among gray levels of corresponding ones of the first pixels.

**10.** The display device of one of claims 8-9, wherein the display panel (48) is a liquid crystal display panel.

**Patentansprüche**

**1.** Lichtemissionsvorrichtung, aufweisend:

eine Lichtemissionstafel (10) zur Emission von Licht; und
einen Lichtdiffusor (12) zur Streuung von Licht, das von der Lichtemissionstafel (10) emittiert wird;
wobei die Lichtemissionstafel (10) aufweist:

ein erstes Substrat (14) und ein zweites Substrat (16), die einander zugewandt sind, wobei eine Lücke zwischen ihnen besteht;
eine Elektronenemissionseinheit (26) auf einer Seite des ersten Substrats (14) zur Emission von Elektronen zum zweiten Substrat (16);
eine Lichtemissionseinheit (28) auf einer Seite des zweiten Substrats (16), die dem ersten Substrat (14) zugewandt ist, zur Emission von sichtbarem Licht auf Anregung durch die Elektronen, die von der Elektronenemissionseinheit (26) emittiert werden; und
eine Vielzahl von Abstandshaltern (44, 441, 442) zwischen dem ersten Substrat (14) und dem zweiten Substrat (16),
**dadurch gekennzeichnet, dass**
die Vielzahl von Abstandshaltern (44, 441, 442) eine Höhe im Bereich von 5 mm bis 30 mm aufweist, wobei das erste Substrat (14) und das zweite Substrat (16) jeweils einen aktiven Bereich (46) aufweisen, in dem die Elektronenemissionseinheit (26) und die Lichtemissionseinheit (28) angeordnet sind, und wobei die Vielzahl der Abstandshalter (44, 441, 442) die folgende Bedingung erfüllt:

$$0,1 \leq (S2/S1) \times 100 \leq 1,5,$$

wobei S1 eine Größe des aktiven Bereichs (46) ist und S2 eine Gesamtfläche ist, die von der Vielzahl der Abstandshalter (41, 441, 442) im aktiven Bereich (46) eingenommen wird.

**2.** Lichtemissionsvorrichtung nach Anspruch 1, wobei die Vielzahl der Abstandshalter (41, 441, 442) eine viereckige Pfeilerstruktur, eine Zylinderstruktur oder eine wandartige Struktur aufweist.

3. Lichtemissionsvorrichtung nach Anspruch 1, wobei die Vielzahl der Abstandshalter (44, 441, 442) eine viereckige Pfeilerstruktur aufweist und eine Breite auf einer Seite jedes Abstandshalters aus der Vielzahl der Abstandshalter im Bereich von 0,2 bis 5 mm liegt.

4. Lichtemissionsvorrichtung nach einem der vorhergehenden Ansprüche, wobei die Elektronenemissionseinheit (26) Kathodenelektroden (32), Gate-Elektroden (34) und Elektronenemissionsregionen (30) aufweist, wobei die Gate-Elektroden (34) die Kathodenelektroden (32) derart kreuzen, dass Kreuzungsbereiche definiert werden, die Gate-Elektroden (34) von den Kathodenelektroden (32) isoliert sind und die Elektronenemissionsregionen (30) mit den Kathodenelektroden (32) elektrisch gekoppelt sind.

5. Lichtemissionsvorrichtung nach Anspruch 3, wobei die Vielzahl der Abstandshalter (44, 441, 442) außerhalb der Kreuzungsbereiche angeordnet ist.

6. Lichtemissionsvorrichtung nach einem der vorhergehenden Ansprüche, wobei die Lichtemissionseinheit (28) eine Anodenelektrode (38), die zum Erhalt einer Anodenspannung im Bereich von 7 kV bis 17 kV ausgebildet ist, und eine Phosphorschicht (40) auf einer Seite der Anodenelektrode (38) aufweist.

7. Lichtemissionsvorrichtung nach einem der vorhergehenden Ansprüche, wobei der Lichtdiffusor (12) vor dem zweiten Substrat (16) angeordnet ist und vom zweiten Substrat (16) in einem Abstand beabstandet ist, der unter oder gleich 12 mm beträgt.

8. Anzeigevorrichtung, aufweisend:

   eine Anzeigetafel (48) zur Anzeige eines Bildes; und
   eine Lichtemissionsvorrichtung (100) nach einem der Ansprüche 1-7, wobei die Lichtemissionsvorrichtung (100) eine Lichtemissionstafel (10) zur Emission von Licht zur Anzeigetafel (48) aufweist, und
   einen Lichtdiffusor (12) zwischen der Anzeigetafel (48) und der Lichtemissionstafel (10).

9. Anzeigevorrichtung nach Anspruch 8, wobei die Anzeigetafel (48) erste Pixel aufweist und die Lichtemissionstafel (10) zweite Pixel aufweist, wobei die Anzahl zweiter Pixel kleiner als die Anzahl erster Pixel ist, und wobei jeder der zweiten Pixel zur Emission von Licht ausgebildet ist, das eine unabhängig kontrollierte Leuchtdichte gemäß einem höchsten Grauwert unter Grauwerten sich entsprechender Pixel der ersten Pixel aufweist.

10. Anzeigevorrichtung nach einem der Ansprüche 8-9, wobei die Anzeigetafel (48) eine Flüssigkristallanzeigetafel ist.


**Revendications**

1. Dispositif d'émission de lumière comprenant :

   un panneau (10) d'émission de lumière destiné à émettre de la lumière ; et
   un diffuseur (12) de lumière destiné à diffuser de la lumière émise par le panneau (10) d'émission de lumière ;
   dans lequel le panneau (10) d'émission de lumière inclut :

   un premier substrat (14) et un second substrat (16) en face l'un de l'autre avec un espace entre les deux ;
   une unité (26) d'émission d'électrons sur un côté du premier substrat (14) pour émettre des électrons en direction du second substrat (16) ;
   une unité (28) d'émission de lumière sur un côté du second substrat (16) en face du premier substrat (14) pour émettre de la lumière visible lors de l'excitation par les électrons émis par l'unité (26) d'émission d'électrons ; et
   une pluralité d'écarteurs (44, 441, 442) entre le premier substrat (14) et le second substrat (16),
   **caractérisé en ce que** les écarteurs de la pluralité d'écarteurs (44, 441, 442) ont une hauteur allant de 5 mm à 30 mm, et dans lequel le premier substrat (14) et le second substrat (16) incluent chacun une zone active (46) dans laquelle sont situés l'unité (26) d'émission d'électrons et l'unité (28) d'émission de lumière, et **en ce que** la pluralité d'écarteurs (44, 441, 442) satisfait la condition suivants :

$$0,1 \leq (S2/S1) \times 100 \leq 1,5,$$

où S1 est la superficie de la zone active (46) et S2 est la superficie totale occupée par la pluralité d'écarteurs (44, 441, 442) à l'intérieur de la zone active (46).

2. Dispositif d'émission de lumière selon la revendication 1, dans lequel les écarteurs de la pluralité d'écarteurs (44, 441, 442) ont une structure colonnaire quadrangulaire, une structure cylindrique ou une structure du type paroi.

3. Dispositif d'émission de lumière selon la revendication 1, dans lequel les écarteurs de la pluralité d'écarteurs (44, 441, 442) ont une structure colonnaire quadrangulaire et une largeur de côté de chacun de la pluralité d'écarteurs allant de 0,2 à 5 mm.

4. Dispositif d'émission de lumière selon l'une des revendications précédentes, dans lequel l'unité (26) d'émission d'électrons inclut des électrodes (32) de cathode, des électrodes (34) de grille et des régions (30) d'émission d'électrons, les électrodes (34) de grille croisant les électrodes (32) de cathode pour définir des régions de croisement, les électrodes (34) de grille étant isolées des électrodes (32) de cathode, et les régions (30) d'émission d'électrons étant raccordées électriquement aux électrodes (32) de cathode.

5. Dispositif d'émission de lumière selon la revendication 3, dans lequel les écarteurs de la pluralité d'écarteurs (44, 441, 442) sont situés à l'extérieur des régions de croisement.

6. Dispositif d'émission de lumière selon l'une des revendications précédentes, dans lequel l'unité (28) d'émission de lumière inclut une électrode (38) d'anode apte à recevoir une tension d'anode allant de 7 kV à 17 kV et inclut une couche (40) de luminophore sur un côté de l'électrode (38) d'anode.

7. Dispositif d'émission de lumière selon l'une des revendications précédentes, dans lequel le diffuseur (12) de lumière est situé en face du second substrat (16) et séparé du second substrat (16) par une distance inférieure ou égale à 12 mm.

8. Dispositif d'affichage comprenant :

   un panneau (48) d'affichage destiné à afficher une image ; et
   un dispositif (100) d'émission de lumière selon l'une des revendications 1 à 7, le dispositif (100) d'émission de lumière comprenant un panneau (10) d'émission de lumière destiné à émettre de la lumière en direction du panneau (48) d'affichage, et un diffuseur (12) de lumière entre le panneau (48) d'affichage et le panneau (10) d'émission de lumière.

9. Dispositif d'affichage selon la revendication 8, dans lequel le panneau (48) d'affichage inclut des premiers pixels et le panneau (10) d'émission de lumière inclut des seconds pixels, dans lequel le nombre de seconds pixels est moindre que le nombre de premiers pixels, et dans lequel chacun des seconds pixels est apte à émettre de la lumière ayant une luminosité commandée indépendamment en fonction d'un niveau de gris le plus élevé parmi les niveaux de gris de ceux des premiers pixels qui lui correspondent.

10. Dispositif d'affichage selon l'une des revendications 8 et 9, dans lequel le panneau (48) d'affichage est un panneau d'affichage à cristaux liquides.

# FIG.1

# FIG.2

EP 1 923 903 B1

# FIG.3

EP 1 923 903 B1

# FIG.4

# FIG.5

# FIG.6

EP 1 923 903 B1

# FIG.7

EP 1 923 903 B1

# FIG.8

# FIG.9

**EP 1 923 903 B1**

**REFERENCES CITED IN THE DESCRIPTION**

**Patent documents cited in the description**

- US 20050052116 A